# EUROPEAN PATENT APPLICATION

(11) **EP 3 171 072 A1**
(43) Date of publication of application: **24.05.2017**
(21) Application number: 15821598.8
(22) Date of filing: 16.07.2015
(51) Int. Cl.: F21S 2/00, B32B 27/00, B32B 27/36

(54) **PROTECTIVE FILM FOR WAVELENGTH CONVERSION SHEET, WAVELENGTH CONVERSION SHEET AND BACKLIGHT UNIT**

(30) Priority: 18.07.2014 JP 2014147620; 16.10.2014 JP 2014211857
(71) Applicant: Toppan Printing Co., Ltd., Tokyo 110-0016 (JP)
(72) Inventor: TOKINOYA, Osamu, Tokyo 110-0016 (JP); KITAHARA, Tsukasa, Tokyo 110-0016 (JP); NISHIKAWA, Takeshi, Tokyo 110-0016 (JP)
(74) Representative: TBK
(86) International application number: PCT/JP2015/070421
(87) International publication number: WO 2016/010116

(57) **Abstract**

A protective film for wavelength conversion sheet for protecting a fluorescent substance in a wavelength conversion sheet, the protective film for wavelength conversion sheet having a structure in which two or more barrier films, each comprising a substrate and one or more barrier layers provided on at least one surface of the substrate, are laminated.

## Description

### Technical Field

The present invention relates to a protective film for wavelength conversion sheet, and a wavelength conversion sheet using the same and a backlight unit.

### Background Art

A liquid crystal display is a display apparatus for displaying images and the like by applying voltage to control the orientation of the liquid crystals and passing or blocking light in each area. A back light provided on the back of a liquid crystal display is used as a light source for the liquid crystal display. Although a cold cathode tube has conventionally been used as the back light, a LED (light emitting diode) has recently been used in place of the cold cathode tube for the reasons of long operating life, bright colors, and the like.

In the LED used for the back light, the white LED technology plays a critically important role. The white LED technology commonly uses a method of exciting a cerium-doped YAG : Ce (yttrium/aluminum/garnet : cerium) down-conversion fluorescent substance with a blue (450 nm) LED chip. In this case, the blue light of LED mixed with the yellow light having a wide wavelength range generated from the YAG : Ce fluorescent substance creates the white light. However, the thus obtained white light is usually somewhat bluish and often gives the impression of "cold" or "coolish" white color.

Incidentally, nano-sized fluorescent substances using quantum dots have been commercialized in recent years. The quantum dots are luminescent semiconductor nanoparticles with a diameter range from about 1 to 20 nm. Since the quantum dots show a wide excitation spectrum and have a high quantum efficiency, they can be used as the fluorescent substance for converting an LED wavelength. Further, there is such a benefit that the emission wavelength throughout the entire visible range can completely be controlled only by changing the dot size or the kind of a semiconductor material. For this reason, the quantum dots are considered to have a potential of creating many different colors in practice, particularly warm white colors strongly desired in the lighting industry. Additionally, when three types of dots corresponding to the emission wavelengths of red, green, and blue are combined, white lights with different color rendering indices can be obtained. As described above, the liquid crystal display using the back light lit by the quantum dots can improve the color tones and express many of the colors identifiable by a person without increasing thickness, power consumption, costs, and production process as compared with conventional ones.

The back light using the white color LED as described above has a configuration in which a wavelength conversion sheet, wherein a fluorescent substance having a predetermined emission spectrum (quantum dots, YAG : Ce or the like) is diffused in a film, the surface thereof is sealed with a barrier film and, in some cases, the edge portions thereof are also sealed, is combined with an LED light source and a light guiding panel.

The barrier film prevents a moisture and gases from passing therethrough by forming a thin film by vapor deposition or the like on the surface of a substrate such as a plastic film. The barrier film is required to prevent poor appearance such as splashes, scratches, and wrinkles in addition to the transparency and barrier properties. The splashing referred herein is a phenomenon in which a material to be deposited is scattered while remained as a fine particle of a high temperature and adheres to a substrate as it is to become a foreign object or cause a hole in the substrate. Contrary to such a demand, the conventional barrier films pose a drawback of failing to achieve a satisfactory performance as most of them have been used as wrapping materials for food, pharmaceutical products and the like and packaging materials for electronic devices or the like. For using with a liquid crystal display, for example, Patent Literature 1 proposes a back light having a structure where a fluorescent substance is interposed between barrier films for preventing deterioration of the fluorescent substance.

### Citation List

### Patent Literature

Patent Literature 1: Japanese Unexamined Patent Publication No. 2011-013567

### Summary of Invention

### Technical Problem

However, when a display was produced with sealed quantum dots using the barrier film described in Patent Literature 1, there have been the following problems: the barrier properties were insufficient and consequently the obtained white color light had a short operating life or irregular emission of the white color LED was caused due to scratches or wrinkles of the film, patterns of quantum dots or the like. Further, when the splashing took place to the barrier film, there was the following problem: insufficient barrier was caused from the splashed site and the luminance was partially deteriorated.

The present invention was accomplished in view of such a circumstance and has an object to provide a protective film for wavelength conversion sheet capable of exhibiting good barrier properties for an extended period of time as a protective film for protecting a fluorescent substance in a wavelength conversion sheet and preventing the occurrence of poor appearance caused by splashes, scratches, wrinkles or the like, and a wavelength conversion sheet and a backlight unit using such a protective film.

### Solution to Problem

For achieving the above object, the present invention provides a protective film for wavelength conversion sheet for protecting a fluorescent substance in a wavelength conversion sheet, the protective film for wavelength conversion sheet having a structure in which two or more barrier films, each comprising a substrate and one or more barrier layers provided on at least one surface of the substrate, are laminated.

Such a protective film for wavelength conversion sheet having the structure in which two or more of the above barrier films are laminated can thus exhibit good barrier properties for an extended period of time and prevent the occurrence of poor appearance caused by splashes, scratches, wrinkles or the like. Particularly in the present invention, unlike the case where a plurality of barrier layers are laminated on one sheet of substrate, two or more of the barrier films, each having a laminated structure of a substrate and a barrier layer are laminated, whereby the prevention effect on the occurrence of insufficient barrier caused by splashes, scratches, wrinkles or the like can notably be improved. The reason why such an effect can be rendered is considered that, in the above structure, each of the substrates and barrier layers is independently provided and thus the prevention effect on the occurrence of insufficient barrier can independently be exhibited.

Further, the back light using a fluorescent substance such as quantum dots also conventionally posed a problem of easily causing interference fringes such as Newton's rings by the thin-film interference as a result of laminating a plurality of barrier layers on one sheet of substrate. The protective film for wavelength conversion sheet of the present invention, when provided with the above configuration, can render the effect to reduce the occurrence of interference fringes.

It is preferable that the protective film for wavelength conversion sheet of the present invention further has a coating layer having an optical function wherein the coating layer is disposed on at least one surface of the protective film for wavelength conversion sheet. It is preferable for the above optical function as referred herein to be an interference fringe prevention function. Further, it is preferable that the above coating layer contains a binder resin and microparticles dispersed in the binder resin. When the coating layer is disposed on the surface of the protective film for wavelength conversion sheet, various optical functions can be imparted. Particularly, when the coating layer having the interference fringe prevention function is provided, the occurrence of interference fringes can be prevented and the fluctuation of lights from a light source can accordingly be prevented.

In the protective film for wavelength conversion sheet of the present invention, it is preferable that the above substrate be a polyethylene terephthalate film or a polyethylene naphthalate film. By this, better transparency and barrier properties can be achieved.

In the protective film for wavelength conversion sheet of the present invention, it is preferable that the barrier layer includes an inorganic thin film layer laminated on one surface of the substrate and a gas barrier covering layer laminated on the inorganic thin film layer. By this, better barrier properties against a moisture and gases can be rendered.

In the protective film for wavelength conversion sheet of the present invention, the above barrier layer may have a structure in which two or more of the inorganic thin film layers and two or more of the gas barrier covering layers are alternately laminated one by one. In this instance, much better barrier properties can be achieved for an extended period of time.

In the protective film for wavelength conversion sheet of the present invention, it is preferable that the inorganic thin film layer be a layer containing at least one of silicon oxide and aluminum oxide. By this, much better barrier properties can be achieved.

In the protective film for wavelength conversion sheet of the present invention, it is preferable that the gas barrier covering layer be a layer containing at least one selected from the group consisting of hydroxyl group-containing polymer compounds, metal alkoxides, hydrolyzates of metal alkoxides, and metal alkoxide polymers. By this, much better barrier properties can be achieved.

In the protective film for wavelength conversion sheet of the present invention, it is preferable that two or more of the barrier films be laminated using an adhering layer containing at least one of acrylic resins, urethane resins, and ester resins. When such barrier films are used, much better transparency and adhesiveness can be achieved.

In the protective film for wavelength conversion sheet of the present invention, two or more of the barrier films may be structured to be laminated using the adhering layer and, of the adjacent two barrier films, the barrier layer of one of the barrier films is disposed so as to face the substrate of the other barrier film via the adhering layer. In this case, when forming the wavelength conversion sheet, the protective film for wavelength conversion sheet is disposed so that the barrier layer of the other barrier film faces toward the fluorescent substance side to dispose the barrier layer at a place close to the fluorescent substance, whereby the barrier properties for the fluorescent substance can more effectively be exhibited.

Also, in the protective film for wavelength conversion sheet of the present invention, two or more of the above barrier films may be structured to be laminated using the adhering layer and the barrier layers of the adjacent two barrier films are disposed so as to face against each other via the adhering layer. In this case, when forming the wavelength conversion sheet, the substrate can be disposed between the barrier layer and the fluorescent substance and thus, even when unevenness or a foreign object is present on the fluorescent substance, shocks are relieved by the substrate and the barrier layer can accordingly be prevented from being damaged. As a result, adverse effects on the barrier layer caused by splashes, scratches, wrinkles or the like can be minimized, whereby much better barrier properties can be achieved.

Further, the protective film for wavelength conversion sheet of the present invention further comprises a coating layer having an optical function disposed on at least one surface, wherein the barrier layer includes a silica deposition layer as the inorganic thin film layer; a ratio of oxygen to silicon, an O/Si ratio, contained in the silica deposition layer may be 1.7 or more and 2.0 or less on an atomic ratio basis; and a refractive index of the silica deposition layer may be 1.5 or more and 1.7 or less; a reflectance of the protective film for wavelength conversion sheet may be 10% or more and 20% or less and a transmittance of the protective film for wavelength conversion sheet may be 80% or more and 95% or less at all wavelengths of 450 nm, 540 nm, and 620 nm.

According to the protective film for wavelength conversion sheet, since the O/Si ratio is 1.7 or more on an atomic ratio basis, a proportion of the Si-Si bond in the silica deposition layer is reduced to low and colored metals decrease, whereby a transmittance of the silica deposition layer is increased. To the contrary, since the O/Si ratio is 2.0 or less on an atomic ratio basis, the growth of the deposition layer is densed, whereby the silica deposition layer has good barrier properties. The protective film for wavelength conversion sheet can reduce the entrance of water vapor or the like. Thus, when a backlight unit including the wavelength conversion sheet having such a protective film for wavelength conversion sheet is produced, the backlight unit maintains high luminance for an extended period of time and good appearance by preventing the occurrence of color irregularities, black spots, and the like when used for a display. Further, the refractive index of the silica deposition layer is 1.5 or more and 1.7 or less, and the reflectance of the protective film for wavelength conversion sheet is 10% or more and 20% or less and a transmittance of the protective film for wavelength conversion sheet is 80% or more and 95% or less. Accordingly, the protective film for wavelength conversion sheet reduces an optical interference in the film and increases the luminance of the backlight unit.

The present invention also provides a wavelength conversion sheet comprising a fluorescent substance layer containing a fluorescent substance and the protective film for wavelength conversion sheet of the present invention laminated on at least one surface of the fluorescent substance layer. Such a wavelength conversion sheet comprising the protective film for wavelength conversion sheet of the present invention can exhibit good barrier properties for an extended period of time, prevent the occurrence of insufficient barrier caused by splashes, scratches, wrinkles or the like, and further reduce the occurrence of interference fringes.

The present invention also provides a wavelength conversion sheet comprising a fluorescent substance layer containing a fluorescent substance and the protective film for wavelength conversion sheet of the present invention laminated on at least one surface of the fluorescent substance layer, wherein two or more of the barrier films in the protective film for wavelength conversion sheet are structured to be laminated using the adhering layer and, of the adjacent two barrier films, the barrier layer of the one of the barrier films is disposed so as to face the substrate of the other barrier film via the adhering layer, and the barrier layer of the other barrier film is disposed to face toward the fluorescent substance layer side. The above wavelength conversion sheet comprising the protective film for wavelength conversion sheet of the present invention can thus exhibit good barrier properties for an extended period of time, prevent the occurrence of insufficient barrier caused by splashes, scratches, wrinkles or the like, and further reduce the occurrence of interference fringes. When the barrier layer of the other barrier film in the protective film for wavelength conversion sheet is disposed to face toward the fluorescent substance layer side, the barrier layer is provided at a place close to the fluorescent substance layer, whereby the barrier properties for the fluorescent substance layer can more effectively be exhibited.

In the wavelength conversion sheet of the present invention, it is preferable that the protective film for wavelength conversion sheet have a coating layer having an optical function on a surface opposite side to the side facing the fluorescent substance layer.

The present invention further provides a backlight unit comprising an LED light source, a light guiding panel, and the wavelength conversion sheet of the present invention. The backlight unit comprising the wavelength conversion sheet of the present invention can thus provide a display with which the reduction in the luminance is prevented for an extended period of time, the influence caused by poor appearance is prevented, close-to-natural bright colors are created, and images with good color tones can stably be displayed for an extended period of time.

### Advantageous Effects of Invention

According to the present invention, as a protective film for protecting a fluorescent substance in the wavelength conversion sheet, a protective film for wavelength conversion sheet capable of exhibiting good barrier properties for an extended period of time, and preventing the occurrence of insufficient barrier caused by splashes, scratched, wrinkles or the like, as well as a wavelength conversion sheet and a backlight unit using such a protective film can be provided.

### Brief Description of Drawings

[Fig. 1]Fig. 1 is a schematic cross sectional view of the wavelength conversion sheet according to the first embodiment of the present invention.
[Fig. 2] Fig. 2 is a schematic cross sectional view of the wavelength conversion sheet according to the second embodiment of the present invention.
[Fig. 3]Fig. 3 is a schematic cross sectional view of the protective film for wavelength conversion sheet according to the third embodiment of the present invention.

### Description of Embodiments

Hereinafter, preferred embodiments of the present invention are described in detail with reference to the drawings. Note that, in the drawings, the same or equivalent elements are denoted by the same symbols, and the overlapping description is omitted. Further, the positional relation of the left, right, top and bottom is, unless otherwise stated, based on the positional relation as shown in the drawings. Furthermore, the scale of the drawings is not limited to the scale shown in the drawings.

### <Wavelength conversion sheet according to first embodiment>

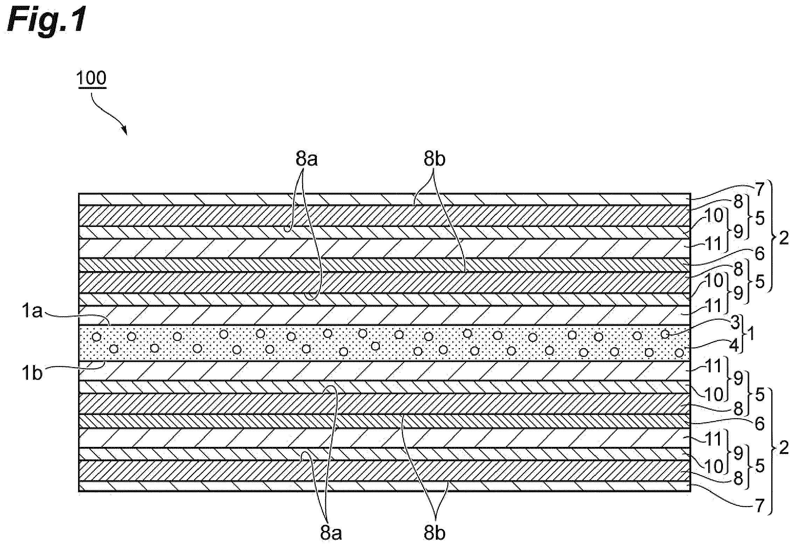

First, the first embodiment of the present invention is described. Fig. 1 is a schematic cross sectional view of the wavelength conversion sheet according to the first embodiment of the present invention. The wavelength conversion sheet shown in Fig. 1 contains a fluorescent substance such as quantum dots and can be used, for example, for a backlight unit for converting LED wavelengths.

As shown in Fig. 1, the wavelength conversion sheet 100 of the present embodiment is generally configured with a fluorescent substance layer (wavelength conversion layer) 1 containing a fluorescent substance and protective films for wavelength conversion sheet (hereinafter simply referred to also as "protective film") 2, 2 provided on one surface, the 2a side, and the other surface, the 2b side, of the fluorescent substance layer 1, respectively. Thus, the fluorescent substance layer 1 is structured to be enveloped (that is, sealed) between the protective films 2, 2.

Incidentally, a backlight unit is typically configured with a light guiding panel and an LED light source. The LED light source is disposed on a side surface of the light guiding panel. Inside the LED light source, a plurality of LED elements whose emitting light color is blue are provided. The LED element may be a purple LED or an LED of a lower wavelength. The LED light source irradiates the light toward the side surface of the light guiding panel. In the case of the backlight unit which uses the wavelength conversion sheet 100 of the present embodiment, the irradiated light is, for example, via the light guiding panel, incident to the layer (fluorescent substance layer) 1 in which a resin such as an acrylic resin or an epoxy resin is mixed with the fluorescent substance. The barrier properties are required to be imparted to the fluorescent substance layer 1 referred herein and it is thus desired to have a configuration in which the fluorescent substance layer 1 is interposed between a pair of the protective films for wavelength conversion sheet 2, 2. Hereinafter, each layer constituting the wavelength conversion sheet 100 is described in detail.

### (Fluorescent substance layer)

The fluorescent substance layer 1 is a thin film containing a sealing resin 4 and a fluorescent substance 3 and having a thickness of several tens to several hundreds µm. Examples of the sealing resin 4 usable include photosensitive resins and thermosetting resins. Inside the sealing resin 4, one or more types of the fluorescent substances 3 are sealed in a state of being mixed. The sealing resin 4 serves to adjoin the fluorescent substance layer 1 and a pair of the protective films 2, 2 when laminating and to fill gaps between them. The fluorescent substance layer 1 may also be those in which two or more of the fluorescent substance layers, wherein only one type of fluorescent substances 3 are sealed, are laminated. Two or more types of the fluorescent substances 3 used in one, or two or more, of these fluorescent substance layers are selected from those having the same excitation wavelength. The excitation wavelength is selected based on the wavelength of light which the LED light source irradiates. The fluorescent colors of the two or more types of fluorescent substances 3 are different from each other. When the two types of fluorescent substances 3 are used, the fluorescent colors are preferably red and green, respectively. The wavelength of each of the fluorescent light and the wavelength of light irradiated from the LED light source are selected based on the spectrum characteristics of color filters. The fluorescent peak wavelengths are, for example, 610 nm in the red color and 550 nm in the green color.

Next, the particle structure of the fluorescent substance 3 is described. Quantum dots are preferably used as the fluorescent substance 3. Examples of the quantum dot include those wherein a core, as a light emitting part, is covered with a shell as a protective film. Example of the core include cadmium selenide (CdSe) and examples of the shell include zinc sulfide (ZnS). The surface defects of CdSe particles are coated with ZnS with a wide band gap, whereby the quantum yield is enhanced. The fluorescent substance 3 may be those in which the core is double-coated by the first shell and the second shell. In this case, CsSe for the core, zinc selenide (ZnSe) for the first shell, and ZnS for the second shell can be used. Further, YAG : Ce or the like can be used, other than the quantum dot, as the fluorescent substance 3.

The average particle size of the fluorescent substance 3 is preferably 1 to 20 nm. Further, The thickness of the fluorescent substance layer 1 is preferably 1 to 500 µm.

It is preferable that the content of the fluorescent substance 3 in the fluorescent substance layer 1 be 1 to 20 mass%, and it is more preferable to be 3 to 10 mass%, on a basis of the total amount of the fluorescent substance layer 1.

Examples of the sealing resin 4 usable include thermoplastic resins, thermosetting resins, and ultraviolet curable resins. One of these resins can be used singly, or two or more thereof can be used in combination.

Examples of the thermoplastic resin usable include cellulose derivatives such as acetyl cellulose, nitrocellulose, acetyl butyl cellulose, ethyl cellulose, and methyl cellulose; vinyl resins such as vinyl acetate and copolymers thereof, vinyl chloride and copolymers thereof, and vinylidene chloride and copolymers thereof; acetal resins such as polyvinyl formal and polyvinyl butylal; acrylic resins such as acrylic resins and copolymers thereof and methacrylic resins and copolymers thereof; polystyrene resins, polyamide resins, linear polyester resins, fluororesins, and polycarbonate resins.

Examples of the thermosetting resin include phenol resins, urea melamine resins, polyester resins, and silicone resins.

Examples of the ultraviolet curable resin include photopolymerizable prepolymers such as epoxy acrylate, urethane acrylate, and polyester acrylate. Further, using these photopolymerizable prepolymers as the main component, a monofunctional or polyfunctional monomer can be used as a diluent.

### (Protective film for wavelength conversion sheet)

A protective film for wavelength conversion sheet 2 comprises two sheets of barrier films 5 comprising a substrate 8 and a barrier layer 9, an adhering layer 6, and a coating layer 7. The barrier layer 9 provided on one surface 8a of the substrate 8 is laminated so as to face the other substrate 8 via the adhering layer 6. Further, when forming the protective film 2 of the present embodiment, each of the protective films 2, 2 is, as shown in Fig. 1, laminated so that the barrier layers 9 face toward the fluorescent substance layer 1.

The barrier film 5 comprises, as shown in Fig. 1, the substrate 8 and the barrier layer 9 provided on one surface 8a of the substrate 8.

The substrate 8 is not particularly limited but it is desirable for the substrate to have a total light transmittance of 85% or more. For example, as the substrate having high transparency and good heat resistance, polyethylene terephthalate films and polyethylene naphthalate films can be used.

Further, the thickness of the substrate 8 is not particularly limited, but it is desirable to be 50 µm or less for reducing the total thickness of the wavelength conversion sheet 100. Furthermore, it is desirable that the thickness of the substrate 8 be 12 µm or more for achieving good barrier properties.

The barrier layer 9 includes an inorganic thin film layer 10 and a gas barrier covering layer 11. As shown in Fig. 1, the barrier layer 9 is configured to have the inorganic thin film layer 10 laminated on one surface (one side) 8a of the substrate 8 and the gas barrier covering layer 11 laminated on the inorganic thin film layer 10.

The inorganic thin film layer (inorganic oxide thin film layer) 10 is not particularly limited but, for example, aluminum oxide, silicon oxide, magnesium oxide, or mixtures thereof can be used. Of these, it is desirable to use aluminum oxide or silicon oxide from the perspectives of barrier properties and productivity.

It is preferable that the thickness (film thickness) of the inorganic thin film layer 10 range from 5 to 500 nm, and it is more preferable to range from 10 to 100 nm. When a film thickness is 5 nm or more, an even film is easily formed and the inorganic thin film is likely to fully function as a gas barrier material. On the other hand, when a film thickness is 500 nm or less, more sufficient flexibility is retained due to being a thin film and generation of cracks on the thin film caused by external factors such as bending and pulling after the film is formed is likely to be prevented more reliably.

The gas barrier covering layer 11 is provided to prevent secondary various damages during post processes and also to impart high barrier properties. It is preferable that the gas barrier covering layer 11 contain as a component at least one selected from the group consisting of hydroxyl group-containing polymer compounds, metal alkoxides, hydrolyzates of metal alkoxides, and metal alkoxide polymers.

Specific examples of the hydroxyl group-containing polymer compound include water soluble polymers such as polyvinyl alcohol, polyvinylpyrrolidone, and starches, but the barrier properties are best exhibited particularly when polyvinyl alcohol is used.

The metal alkoxides are the compounds represented by the formula: M(OR)ₙ, (wherein M is a metal atom such as Si, Ti, Al, or Zr, R is an alkyl group such as -CH₃ or -C₂H₅, n is an integer corresponding to the valence of M). Specific examples include tetraethoxysilane [Si(OC₂H₅)₄] and triisopropoxy aluminum [Al(O-iso-C₃H₇)₃]. Tetraethoxysilane and triisopropoxy aluminum are preferable since they are relatively stable in an aqueous solvent after hydrolyzed. Further, examples of the hydrolyzate and polymer of metal alkoxides include silicic acid (Si(OH)₄) as the hydrolyzates and polymers of tetraethoxysilane and aluminum hydroxide (Al(OH)₃) as the hydrolyzates and polymers of tripropoxy aluminum.

It is preferable that the thickness (film thickness) of the gas barrier covering layer 11 range from 50 to 1000 nm, and it is more preferable to range from 100 to 500 nm. When a film thickness is 50 nm or more, more sufficient gas barrier properties are likely to be achieved, whereas, when a thickness is 1000 nm or less, sufficient flexibility is likely to be retained due to being a thin film.

Two sheets of the barrier films 5 are disposed, as shown in Fig. 1, via the barrier layer 9 disposed on one surface 8a of the substrate 8 and the adhering layer 6, so as to face the surface 8b side of the other substrate 8 on which the barrier layer 9 is not disposed. In other words, when the film farther from the fluorescent substance layer 1 is defined as the first barrier film 5 and the other film closer to the fluorescent substance layer 1 is defined as the second barrier film 5, two sheets of the barrier films 5 are laminated via the adhering layer 6 so that the barrier layer 9 of the first barrier film is interposed between the first substrate 8 of the first barrier film 5 and the second substrate 8 of the second barrier film 5. Thus, in the present embodiment, two sheets of the barrier films are used, further the barrier layer 9 is interposed between the first substrate 8 of the first barrier film 5 and the second substrate 8 of the second barrier film 5, and each of the barrier layers 9 is disposed at a place closer to the fluorescent substance layer 1, whereby the barrier properties can more effectively be exhibited even when a defect such as a very small pin hole is caused in the barrier layer 9.

The thicknesses of two sheets of the substrates 8 may be same or different. From a perspective of reducing the thickness of the wavelength conversion sheet 100, the thickness of the second substrate 8 of the second barrier film 5 disposed at the closer side to the fluorescent substance layer 1 may be thinner than that of the first substrate 8 of the first barrier film 5 disposed at the farther side from the fluorescent substance layer 1. As a moisture and gases pass through from the surface of the wavelength conversion sheet 100, the thickness of the first substrate 8 is increased to a relative thickness to prevent a moisture and oxygen from passing through from the surface while the thickness of the second substrate 8 is reduced to a relative thinness to reduce the total thickness of the wavelength conversion sheet 100. As a moisture and oxygen pass though not only from the surface of the barrier film 5 but also from the end surfaces, the entrance of a moisture and oxygen from the end surfaces can be prevented when the thicknesses of the second substrate 8 and the adhering layer 6 are thinner. Accordingly, it is desirable that the combined thickness of the second substrate 8 adjacent to the adhering layer 6 and the adhering layer 6 be 40 µm or less.

The adhering layer 6 is disposed, as shown in Fig. 1, between two sheets of the barrier films 5 so as to affix and laminate the two sheets of barrier films 5. The adhering layer 6 is not particularly limited but adhesives and pressure-sensitive adhesives such as acrylic materials, urethane materials, or polyester materials can be used. More specifically, any of the acrylic pressure-sensitive adhesives, acrylic adhesives, urethane adhesives, and ester adhesives can be used.

Further, the thickness of the adhering layer 6 is not particularly limited but it is desirable to be 10 µm or less to reduce the total thickness of the protective film for wavelength conversion sheet 2 and wavelength conversion sheet 100. On the other hand, from a perspective of assuring better adhesive properties, it is desirable that the thickness of the adhering layer 6 be 3 µm or more.

The coating layers 7 are disposed on each surface of the two protective films for wavelength conversion sheet 2, 2, i.e., on both surfaces of the wavelength conversion sheet 100, to render one or more optical functions and antistatic functions. The optical function referred herein is not particularly limited but examples include the interference fringe (Moire) prevention function, anti-reflection function, and diffusion function. Of these, it is preferable that the coating layer 7 have at least the interference fringe prevention function as the optical function. The present embodiment describes the case where the coating layer 7 has at least the interference fringe prevention function.

The coating layer 7 may be configured with a binder resin and microparticles. Consequently, fine unevenness may be generated on the surface of the coating layer 7 when the microparticles are embedded in the binder resin so that a part of the microparticles is exposed from the surface of the coating layer 7. Thus, when the coating layers 7 are disposed on each surface of the protective films for wavelength conversion sheet 2, 2, i.e., on both surfaces of the wavelength conversion sheet 100, the occurrence of interference fringes such as Newton's rings is fully prevented.

The binder resin is not particularly limited but resins with good optical transparency can be used. More specific examples thereof usable include thermoplastic resins, thermosetting resins, and ionizing radiation curable resins such as polyester resins, acrylic resins, acrylic urethane resins, polyester acrylate resins, polyurethane acrylate resins, urethane resins, epoxy resins, polycarbonate resins, polyamide resins, polyimide resins, melamine resins, and phenol resins. Of these, it is desirable to use acrylic resins with good light resistance and optical properties. These resins may be used singly but a plurality of them can also be used in combination.

The microparticle is not particularly limited and, for example, inorganic microparticles such as silica, clay, talc, calcium carbonate, calcium sulfate, barium sulfate, titanium oxide, or alumina, and organic microparticles such as styrene resins, urethane resins, silicone resins, or acrylic resins can be used. These resins may be used singly but a plurality of them can also be used in combination.

It is preferable that the average particle size of the microparticle be 0.1 to 30 µm, and it is more preferable to be 0.5 to 10 µm. When an average particle size of the microparticle is 0.1 µm or more, good interference fringe prevention function is likely to be achieved, whereas, when an average particle size is 30 µm or less, the transparency is likely to be more enhanced.

It is preferable that the content of the microparticle in the coating layer 7 be 0.5 to 30 mass%, and it is more preferable to be 3 to 10 mass%, on a basis of the total amount of the coating layer 7. When a content of the microparticle is 0.5 mass% or more, the light diffusion function and the effects to prevent the occurrence of interference fringes are likely to be more enhanced, whereas, when a content is 30 mass% or less, the luminance does not reduce.

The protective film for wavelength conversion sheet 2 having the configuration as described above is a laminated film in which two layers of the barrier films 5 are laminated so that only one of the barrier layers 9 is interposed between the first substrate 8 of the first barrier film 5 and the second substrate 8 of the second barrier film 5 and can consequently prevent the influence caused by a defect of the barrier layer 9 such as splashes, thus rendering good barrier properties. Further, much better barrier properties can be exhibited by interposing the barrier layer 9 between the substrates 8 such as PET films having good heat stability. Furthermore, as the coating layer 7 is provided on the surface of the protective film for wavelength conversion sheet 2, the occurrence of interference fringes can be prevented and accordingly the fluctuation of lights from the light source can also be prevented. Thus, when such a protective film for wavelength conversion sheet 2 is used as a protective film for protecting the fluorescent substance of the wavelength conversion sheet 100, the performance of the wavelength conversion sheet 100 which uses a fluorescent substance such as the quantum dot can maximally be exhibited. When the barrier layer 9 is disposed facing toward the fluorescent substance side, the entrance of a moisture and gases from the end surfaces is prevented, whereby deterioration of the fluorescent substance layer 1 can be prevented. Further, when the coating layer 7 having the optical function is provided on the surface opposite side to the side facing the fluorescent substance layer 1, the occurrence of interference fringes such as Newton's ring can be prevented and consequently a display of high efficiency and high definition, with a long operating life, can be obtained. Furthermore, the obtained display can display images in closer to natural bright colors and good color tones.

Next, the method for producing the wavelength conversion sheet 100 of the present embodiment is described. In the method for producing the wavelength conversion sheet 100 of the present embodiment, for example, the fluorescent substance layer 1 can be laminated between a pair of the protective films for wavelength conversion sheet 2, 2 by the following procedure.

### (Production steps of protective film for wavelength conversion sheet 2)

In the production steps of the protective films for wavelength conversion sheet 2, 2, a coating layer 7 is first formed on one surface 8b of the first substrate 8. Specifically, a coating solution in which a binder resin, microparticles, and a solvent as necessary are mixed is applied onto one surface 8b of the first substrate 8 and dried to form the coating layer 7. Then, an inorganic thin film layer 10 is laminated by, for example, the vapor deposition method on the surface 8a opposite side to the surface of the first substrate 8 on which the coating layer 7 is provided. Subsequently, a coating agent containing, as the main agent, an aqueous solution or a solution in a mixture of water/alcohol containing at least one component or the like, selected from the group consisting of hydroxyl group-containing polymer compounds, metal alkoxides, hydrolyzates of metal alkoxides, and metal alkoxide polymers is applied onto the surface of the inorganic thin film layer 10 and dried to form the gas barrier covering layer 11. Thus, the first barrier film 5 provided with the coating layer 7 is obtained in which the coating layer 7 is provided on one surface of the first substrate 8, and the barrier layer 9 comprising the inorganic thin film layer 10 and the gas barrier covering layer 11 is provided on the other surface.

Similarly, the second barrier film 5 provided with the barrier layer 9 can be obtained by the same operation as the above, except that the coating layer 7 is not formed on one surface 8a of the second substrate 8.

Next, the first barrier film 5 on which the coating layer 7 is formed and the second barrier film 5 on which the coating layer 7 is not formed are affixed and laminated using the adhering layer 6. Specifically, the barrier layer 9 of the first barrier film 5 on which the coating layer 7 is formed is faced against the surface on which the barrier layer 9 of the second barrier film 5 is not formed on which the coating layer 7 is not formed, to be laminated using the adhering layer 6. For the adhering layer 6, any of the acrylic pressure-sensitive adhesives, acrylic adhesives, urethane adhesives, and ester adhesives can be used. Thus, the protective film for wavelength conversion sheet 2 in which two sheets of the barrier films 5 are laminated so that only one of the barrier layers 9 is interposed therebetween.

Note that, in the present embodiment, the example in which the coating layer 7 is first formed is described, however, the timing for forming the coating layer 7 is not particularly limited and, for example, the first barrier film 5 before the coating layer 7 is formed thereon and the second barrier film 5 are affixed and subsequently the coating layer 7 may be formed on the surface of the first barrier film 5.

### (Production steps of fluorescent substance layer 1)

In the production steps of the fluorescent substance layer 1, a mixed solution is first prepared by mixing the fluorescent substance 3, the sealing resin 4, and as necessary a solvent. Subsequently, the prepared mixed solution is applied onto the surface of the side on which the coating layer 7 of the protective film for wavelength conversion sheet 2 is not provided. Then, the other protective film for wavelength conversion sheet 2 separately produced is laminated thereon. During this operation, the surfaces of the sides on which the coating layers 7 of the two sheets of the protective films for wavelength conversion sheet 2 are not provided are disposed so as to face the surfaces 1a, 1b of the fluorescent substance layer 1, respectively. Subsequently, when the sealing resin 4 is a photosensitive resin, the wavelength conversion sheet 100 of the present embodiment can be obtained by curing the photosensitive resin by the UV irradiation (UV curing). Note that the photosensitive resin may further be heat-cured after UV-cured. In addition to the photosensitive resins, a thermosetting resin, a chemically curable resin or the like may also be used as the sealing resin 4.

The UV curing referred herein can be carried out at, for example, 100 to 1000 mJ/cm². The heat curing can be carried out, for example, at 60 to 120°C for 0.1 to 3 minutes.

Note that, in the present embodiment, the example in which the fluorescent substance layer 1 is formed on the surface on which the coating layer 7 of one of the protective films for wavelength conversion sheet 2 is not provided and subsequently the other protective film for wavelength conversion sheet 2 is laminated on the surface of the fluorescent substance layer 1 is described but is not limited thereto.

### <Wavelength conversion sheet according to second embodiment>

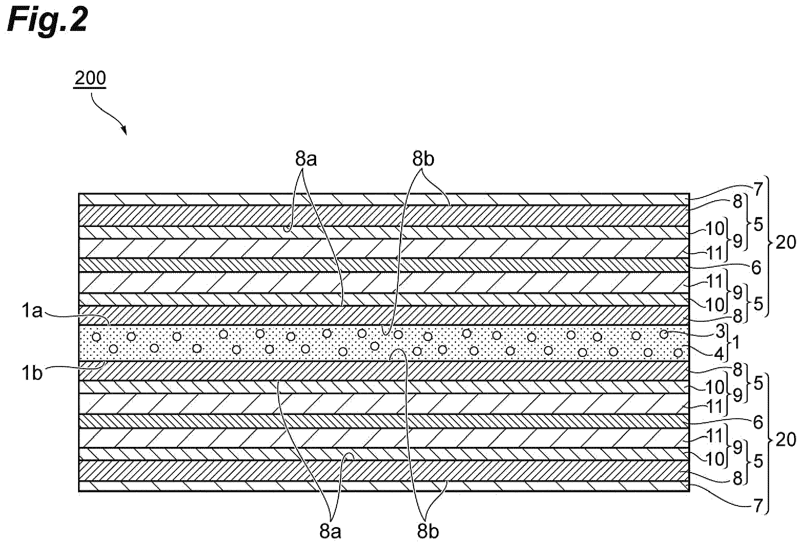

Next, the second embodiment of the present invention is described. Fig. 2 is a schematic cross sectional view of the wavelength conversion sheet according to the second embodiment of the present invention. The wavelength conversion sheet 200 of the second embodiment is different only in the configuration of the protective film for wavelength conversion sheet 20 from the wavelength conversion sheet 100 of the first embodiment. For this reason, in the wavelength conversion sheet 200 of the second embodiment, the same component elements as the first embodiment are denoted by the same symbols, and the descriptions thereof are omitted.

As shown in Fig. 2, the wavelength conversion sheet 200 of the present embodiment is generally configured with a fluorescent substance layer (wavelength conversion layer) 1 containing a fluorescent substance and protective films for wavelength conversion sheet 20, 20 provided on one surface 2a side and the other surface 2b side of the fluorescent substance layer 1, respectively. Thus, the fluorescent substance layer 1 is structured to be enveloped (sealed) between the protective films for wavelength conversion sheet 20, 20.

### (Protective film for wavelength conversion sheet)

The protective film for wavelength conversion sheet 20 of the present embodiment comprises two sheets of barrier films 5 comprising a substrate 8 and a barrier layer 9, an adhering layer 6, and a coating layer 7. When one film farther from the fluorescent substance layer 1 is defined as the first barrier film 5 and the other film closer to the fluorescent substance layer 1 is defined as the second barrier film 5, two sheets of the barrier films 5 are, as shown in Fig. 2, laminated via the adhering layer 6 so that the barrier layer 9 provided on one surface 8a of the first substrate 8 of the first barrier film 5 faces the barrier layer 9 provided on one surface 8a of the second substrate 8 of the second barrier film 5. In other words, the protective film for wavelength conversion sheet 20 has a structure in which the barrier films 5 are laminated against each other so that each of the barrier layers 9 of the two barrier films 5 is interposed between the first substrate 8 and the second substrate 8. According to the configuration of the protective film for wavelength conversion sheet 20, as the substrate 8 is disposed between the barrier layer 9 and the fluorescent substance layer 1 to be protected, shocks are relieved by the substrate 8 even when unevenness or a foreign object is present on the fluorescent substance layer 1, whereby the barrier layer 9 can be prevented from being damaged.

When configuring the wavelength conversion sheet 200 of the present embodiment, each of the protective films for wavelength conversion sheet 20, 20 is, as shown in Fig. 2, laminated so that the surface of the second substrate 8 side of the second barrier film 5 faces toward the fluorescent substance layer 1 side. More specifically, in the wavelength conversion sheet 200, the protective films for wavelength conversion sheet 20, 20 are laminated so that, in the second barrier films 5 on which the coating layers 7 are not provided, the surfaces 8b opposite side to the surfaces on which the barrier layers 9 of the second substrates 8 are provided interpose the fluorescent substance layer 1. Specifically, in the present embodiment, the coating layers 7 are similarly provided on each surface of the protective films for wavelength conversion sheet 20, 20, and thus, on both surfaces of the wavelength conversion sheet 200.

The thicknesses of two sheets of the substrates 8 in the protective film for wavelength conversion sheet 20 may be same or different. From a perspective of reducing the thickness of the wavelength conversion sheet 200, the thickness of the second substrate 8 of the second barrier film 5 disposed at the closer side to the fluorescent substance layer 1 may be thinner than that of the first substrate 8 of the first barrier film 5 disposed at the farther side from the fluorescent substance layer 1. As a moisture and gases pass through from the surface of the wavelength conversion sheet 200, the thickness of the first substrate 8 can be increased to a relative thickness to prevent a moisture and oxygen from passing through from the surface while the thickness of the second substrate 8 can be reduced to a relative thinness to reduce the total thickness of the wavelength conversion sheet 200. As a moisture and oxygen pass though not only from the surface of the barrier film 5 but also from the end surfaces, the entrance of a moisture and oxygen from the end surfaces can be prevented when the thicknesses of the second substrate 8 is thinner. Accordingly, it is desirable that the thickness of the second substrate 8 adjacent to the fluorescent substance layer 1 be 40 µm or less.

According to the wavelength conversion sheet 200 of the second embodiment described above, the same effects rendered by the wavelength conversion sheet 100 of the first embodiment described above can be achieved.

### <Backlight unit>

A backlight unit for a liquid crystal display can be provided using the above wavelength conversion sheet 100 or 200. The backlight unit according to the present embodiment comprises an LED (light emitting diode) light source, a light guiding panel, and the wavelength conversion sheet 100 or 200. The LED light source is disposed on a side surface of the light guiding panel, and the wavelength conversion sheet 100 or 200 is disposed on the light guiding panel (in the traveling direction of light).

The light guiding panel is to efficiently lead the light irradiated from the LED light source, and a known material is used. For the light guiding panel, for example, acryl, polycarbonate, or cycloolefin films are used. The light guiding panel can be molded by, for example, silk printing technique, molding techniques such as injection molding or extrusion molding, or ink jet method. The thickness of the light guiding panel is, for example, 100 to 1000 µm.

Thus far, preferable embodiments of the present invention are described in detail, but the technical scope of the present invention is not limited to the above embodiments and various alterations can be added in the range without departing from the spirit of the invention. For example, the configurations of the wavelength conversion sheets 100, 200 of the above first and second embodiments and the configurations of the protective films for the wavelength conversion sheet 2, 20 are an example and not limited thereto.

The wavelength conversion sheet of the present invention, as in the above first and second embodiments, may have the fluorescent substance layer 1 interposed between the same protective films for wavelength conversion sheet 2, 2 (or 20, 20) or interposed between protective films for wavelength conversion sheet having different configurations.

In the wavelength conversion sheet of the present invention, either one of the protective films for wavelength conversion sheet covering the fluorescent substance layer 1 may be configured to have the coating layer 7, or both of the protective films for wavelength conversion sheet may be configured to have the coating layers 7.

Further, in the wavelength conversion sheet of the present invention, the surface on the side contacting the fluorescent substance layer 1 of the protective film for wavelength conversion sheet may be modified or provided with an easily adhering layer comprising urethane resins or the like, to improve the adhesive properties between the protective films for wavelength conversion sheet and the fluorescent substance layer 1.

Furthermore, in the wavelength conversion sheets 100, 200 shown in Fig. 1 and Fig. 2, the case where the barrier layer 9 comprises a single layer of the inorganic thin film layer 10 and a single layer of the gas barrier covering layer 11, is illustrated, however, the barrier layer 9 may also comprise two or more of at least one of the inorganic thin film layers 10 and the gas barrier covering layers 11. In this instance, it is preferable that the inorganic thin film layers 10 and the gas barrier covering layers 11 be alternately laminated one by one.

Moreover, in the wavelength conversion sheets 100, 200 shown in Fig. 1 and Fig. 2, the both end surfaces of the fluorescent substance layer 1 (in Figures, left and right end surfaces which are not covered with the protective films for wavelength conversion sheet 2, 20) may be sealed with a sealing resin, or the entire fluorescent substance layer 1 may be covered with a sealing resin.

### <Protective film for wavelength conversion sheet according to third embodiment>

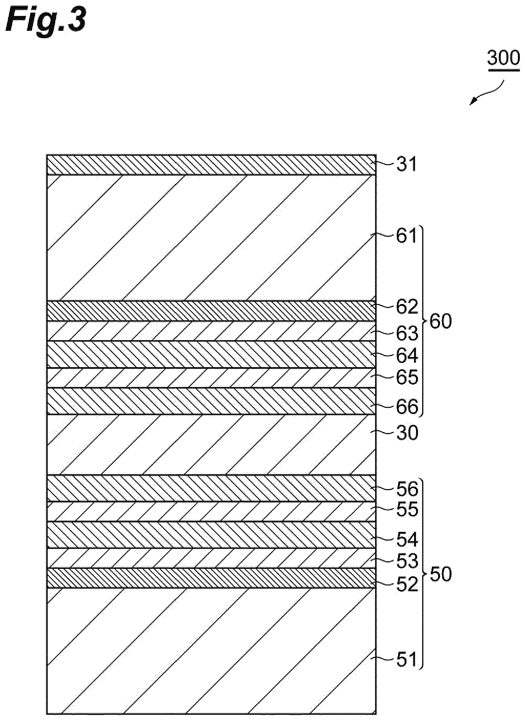

In the wavelength conversion sheets 100, 200 shown in Fig. 1 and Fig. 2, a protective film for wavelength conversion sheet 300 having the configuration shown in Fig. 3 may be used as the protective film for wavelength conversion sheet. Hereinafter, the protective film for wavelength conversion sheet 300 is described.

Fig. 3 is a schematic cross sectional view of the protective film for wavelength conversion sheet according to the third embodiment of the present invention. As shown in Fig. 3, the protective film for wavelength conversion sheet 300 comprises a first barrier film 50, a second barrier film 60, an adhering layer 30, and a coating layer 31. The adhering layer 30 is positioned between the first barrier film 50 and the second barrier film 60 to affix the first barrier film 50 and the second barrier film 60. The coating layer 31, in the second barrier film 60, is disposed on the surface opposite side to the surface on which the second barrier film 60 is in contact with the adhering layer 30.

The coating layer 31 is a layer having one or more optical functions and can have the same configuration as the coating layer 7 in the wavelength conversion sheets 100, 200 described above. It is preferable for the coating layer 31 to have the light diffusion function as the optical function. A preferable embodiment of the coating layer 31 having the light diffusion function (diffusion layer 31) is described below in detail.

The coating layer 31 is, for example, provided with an uneven configuration on the surface thereof so that the light diffusibility is imparted. Further, the interference fringe (Moire) prevention function, anti-reflection function and the like are also imparted. The uneven configuration is formed on the coating layer 31 by, for example, the method of coating an organic layer in which particles or the like are dispersed, and the method of further embossing the organic layer after coated. In the method of coating an organic layer in which particles or the like are dispersed, for example, microparticles are embedded so that a part of the microparticles is exposed from the surface of the organic layer. Thus, fine unevenness is generated on the surface of the coating layer 31, whereby the occurrence of Newton's rings is prevented in the coating layer 31.

Examples of the organic layer include layers containing polymer resins such as polyester resins, acrylic resins, acrylic urethane resins, polyester acrylate resins, polyurethane acrylate resins, epoxy acrylate resins, and urethane resins.

Further, the organic layer can be, for example, a layer containing a polymer resin such as thermoplastic resins, thermosetting resins, and ultraviolet curable resins.

Examples of the thermoplastic resin include cellulose derivatives such as acetyl cellulose, nitrocellulose, acetyl butyl cellulose, ethyl cellulose, and methylcellulose; vinyl resins such as vinyl acetate and copolymers thereof, vinyl chloride and copolymers thereof, and vinylidene chloride and copolymers thereof; acetal resins such as polyvinyl formal and polyvinyl butylal; acrylic resins such as acrylic resins and copolymers thereof and methacrylic resins and copolymers thereof; polystyrene resins, polyamide resins, linear polyester resins, fluororesins, and polycarbonate resins.

Examples of the thermosetting resin include phenol resins, urea melamine resins, polyester resins, and silicone resins.

Examples of the ultraviolet curable resin include photopolymerizable prepolymers such as epoxy acrylate, urethane acrylate, and polyester acrylate. Further, the ultraviolet curable resin can also be composed using the above photopolymerizable prepolymer as the main component and a monofunctional or polyfunctional monomer as a diluent.

It is preferable that the thickness (film thickness) of the organic layer range from 0.1 to 20 µm, and it is particularly preferable to range from 0.3 to 10 µm. When a film thickness of the organic layer is below 0.1 µm, an even film cannot be obtained because a film thickness is too thin, and the optical functions cannot fully be exhibited in some cases, hence not preferable. On the other hand, when a film thickness exceeds 20 µm, the microparticles are not exposed to the surface of the coating layer 31 and the unevenness imparting effect may not be rendered, and also the transparency is reduced and a fad of making a display as thin as possible is not met, hence not preferable.

Examples of the particle to be dispersed in the organic layer can include inorganic microparticles such as silica, clay, talc, calcium carbonate, calcium sulfate, barium sulfate, aluminum silicate, titanium oxide, synthetic zeolite, alumina, smectite, and zirconia. Examples of the particle to be dispersed in the organic layer can include organic microparticles comprising styrene resins, urethane resins, benzoguanamine resins, silicone resins, acrylic resins, ethylene tetrafluoride resins, polyethylene resins, and epoxy resins. Of these, any one may be used, or two or more may be used.

It is preferable that the average primary particle size of the microparticle be 0.5 to 30 µm. In the present embodiment, the average primary particle size can be measured by the laser diffraction method. When an average particle size of the microparticles is below 0.5 µm, the unevenness imparting effect to the surface of the coating layer 31 cannot be rendered, hence not preferable. On the other hand, when an average particle size exceeds 30 µm, particles significantly larger than the organic layer thickness are to be used and inconvenience such as causing reduction in a light beam transmittance is induced, hence not preferable. To the contrary, when an average particle size is within the above range, the uneven configuration can be provided on the surface while maintaining a high light beam transmittance.

The adhering layer 30 can have the same configuration as the adhering layer 6 in the wavelength conversion sheets 100, 200 described above.

The first barrier film 50 comprises a substrate 51, an adhesion layer 52, a first silica deposition layer 53, which is the inorganic thin film layer, a first gas barrier covering layer (a first composite coating layer) 54, a second silica deposition layer 55, which is the inorganic thin film layer, and a second gas barrier covering layer (a second composite coating layer) 56. The adhesion layer 52, the first silica deposition layer 53, the first gas barrier covering layer 54, the second silica deposition layer 55, and the second gas barrier covering layer 56 are laminated in this order on the substrate 51. In the first barrier film 50, the barrier layer is configured with the first silica deposition layer 53, the first gas barrier covering layer 54, the second silica deposition layer 55, and the second gas barrier covering layer 56. The second gas barrier covering layer 56 adheres to the adhering layer 30.

The second barrier film 60 comprises a substrate 61, an adhesion layer 62, a fist silica deposition layer 63, a first gas barrier covering layer 64, a second silica deposition layer 65, and a second gas barrier covering layer 66. The adhesion layer 62, the first silica deposition layer 63, the first gas barrier covering layer 64, the second silica deposition layer 65, and the second gas barrier covering layer 66 are laminated in this order on the substrate 61. In the second barrier film 60, the barrier layer is configured with the first silica deposition layer 63, the first gas barrier covering layer 64, the second silica deposition layer 65, and the second gas barrier covering layer 66. The second gas barrier covering layer 66 adheres to the adhering layer 30.

The substrates 51, 61 can have the same configuration as the substrate 8 in the wavelength conversion sheets 100, 200 described above. It is also preferable to use polyester films as the substrates 51, 61. The polyester film is not particularly limited and examples include engineering plastic films such as polyester films formed of polyethylene terephthalate (PET), polyethylene naphthalate (PEN) or the like, polyolefin films formed of polyethylene, polypropylene, cyclic olefin copolymers (COC), cycloolefin polymers (COP) or the like, polystyrene films, polyamide films formed of 6,6-nylon or the like, polycarbonate films, polyacrylonitrile films, and polyimide films. It is particularly preferable that the substrates 51, 61 be biaxially oriented polyester films, which are stretched in any biaxial directions. The biaxially oriented polyester film has good dimensional stability, heat resistance, and transparency.

The thickness of the substrates 51, 61 is not particularly limited and it is preferable in the range from 3 µm to 200 µm, and more preferable in the range from 6 µm to 50 µm. The thickness of the substrates 51, 61 is the value in consideration of the workability when the adhesion layers 52, 62, the first silica deposition layer 53, 63, the first gas barrier covering layers 54, 64, the second silica deposition layer 55, 65, and the second gas barrier covering layers 56, 66 are laminated. Note that, for laminating each layer, pre-treatment, such as plasma treatment, corona discharge treatment, ozonization, glow discharge treatment, or the like, is optionally carried out for improving the adhesiveness of each layer.

For the substrates 51, 61, it is particularly preferable to use a polyethylene terephthalate film having an acid value (the number of mg of potassium hydroxide required to neutralize 1 g of a resin) of 25 mgKOH/g or less. When an acid value of the substrates 51, 61 exceeds 25 mgKOH/g, the substrate stability is lost especially under a high temperature high humidity environment and the barrier properties are reduced, hence not preferable. On the other hand, when an acid value is 25 mgKOH/g or less, a substrate stability increases and the barrier properties stay stable without being reduced even under a high temperature high humidity environment. Note that, for the measurement method of the acid value, the substrates 51, 61 are cut and weighed, for example, dissolved in cresol with heating and cooled, and subsequently titrated with a potassium hydroxide ethanol solution or the like to determine an acid value. A phenolphthalein solution, for example, can be used as an indicator (see JIS K0070).

It is preferable that the substrates 51, 61 have good hydrolysis resistance performance since the barrier properties of the substrates 51, 61 are stably expressed in an accelerated aging test of the display function under the severe environment of, for example, 60°C/90% RH and 85°C/85% RH. For achieving good hydrolysis resistance performance, it is preferable, for example, that a PET film to be the substrates 51, 61 have a weight average molecular weight of 60000 or more. A PET film, when a weight average molecular weight thereof is below 60000, is typically easily hydrolyzed and the barrier properties of the PET film are likely to be deteriorated. It is preferable that, for achieving better hydrolysis resistance performance, a PET film have a concentration of the terminal carboxyl group reduced to 25 equivalent/10⁶ g or less. When a concentration of the terminal carboxyl group is reduced to 25 equivalent/10⁶ g or less, the reactive sites decrease, whereby the hydrolysis resistance performance of the PET film is enhanced. The concentration of the terminal carboxyl group in polyester can be measured by the method described in a literature (ANALYTICAL CHEMISTRY, Vol 26, p. 1614). The weight average molecular weight is measured by the method such as room temperature GPC analysis.

It is preferable that the PET film be a film with good light transmittance and smoothness. Accordingly, for increasing the light transmittance of the PET film, it is desirable to reduce a lubricant used for the PET film. Further, when the first silica deposition layer is laminated onto the PET film, it is desirable that the center line surface roughness (Ra) of the PET film be 30 nm or less for avoiding the occurrence of cracks or the like in the first silica deposition layer and for forming the first silica deposition layer of an even film thinness. When a center line surface roughness (Ra) is 30 nm or less, the PET film is considered to have good smoothness. The surface roughness of the PET film can be measured by the method according to JIS B0601.

The adhesion layers 52, 62 are provided on the substrates 51,61. The adhesion layers 52, 62 are provided as necessary for assuring the adhesion to the first silica deposition layer. The adhesion layers 52, 62 can be formed by either one of the in-line method in which the adhesion layers 52, 62 are applied when the substrates 51, 61 is stretched and the off-line method in which the adhesion layers 52, 62 are applied in off-line after the substrates 51, 61 are formed, or by both of the in-line method and the off-line method. The adhesion layers 52, 62 are not particularly limited but the composition for the adhesion layer for forming the adhesion layers 52, 62 by the in-line method can be, for example, acrylic materials and urethane materials. The composition for the adhesion layer for forming the adhesion layers 52, 62 by the off-line method can be, for example, a two-component reactive composite of a compound having a hydroxy group such as acrylic polyols and an isocyanate compound having an isocyanate group. The substrates 51, 61 may comprise the adhesion layers 52, 62 not only on one surface but on both surfaces.

The first silica deposition layers 53, 63 and the second silica deposition layers 55, 65 (hereinafter, simply referred also to as "silica deposition layers") are the layers expressing the barrier properties, and equivalent to the inorganic thin film layer 10 in the wavelength conversion sheets 100, 200 described above. Examples of the inorganic compound expressing the barrier properties as the deposition layer include aluminum oxide, silicon oxide, tin oxide, magnesium oxide, zinc oxide, and mixtures thereof, and the silica deposition layer containing silicon oxide is selected in the present embodiment. The silica deposition layer has moisture resistance in the accelerated aging test of the display function under severe environment such as 60°C/90% RH and 85°C/85% RH. The silica deposition layer is produced by a method such as the vacuum deposition method, the sputtering method, the ion plating method, or the plasma chemical vapor deposition (CVD).

It is preferable that a ratio of oxygen to silicon, an O/Si ratio, constituting the silica deposition layers be each 1.7 or more and 2.0 or less on an atomic ratio basis. When an O/Si ratio is below 1.7 on an atomic ratio basis, the proportion of the Si-Si bond in the silica deposition layers increases and a large amount of colored metals are contained, whereby a transmittance of the silica deposition layers may be deteriorated. When an O/Si ratio exceeds 2.0 on an atomic ratio basis, the barrier properties of the silica deposition layers may reduce. It is more preferable that an O/Si ratio of the silica deposition layers suitable to be used for a display be 1.85 to 2.0 on an atomic ratio basis.

The O/Si ratio of the silica deposition layers is measured, for example, by X-ray photoelectron spectroscopy (XPS). A specific example of the XPS measurement apparatus can be an X-ray photoelectron spectroscopy analyzer (manufactured by JEOL LTD., JPS-90MXV). An X-ray source is a non-monochromatic MgKα (1253.6 eV) and an X-ray output can be, for example, 100 W (10 kV - 10 mA). For the quantitative analysis to determine an O/Si ratio, for example, a relative sensitivity factor of 2.28 for O 1s orbital and a relative sensitivity factor of 0.9 for Si 2p orbital are used.

It is preferable that the refractive index of the organic layers constituting the protective film for wavelength conversion sheet 300 such as the first gas barrier covering layers 54, 64 and the second gas barrier covering layers 56, 66 contacting the silica deposition layers be 1.5 to 1.7. Thus, for preventing the optical interference in the protective film for wavelength conversion sheet 300, it is preferable that the refractive index of the silica deposition layers be 1.5 or more and 1.7 or less. It is more preferable that the refractive index of the silica deposition layers be 1.6 to 1.65 from a perspective of transparency to be used for a display in addition to the barrier properties. Note that, when measuring a refractive index of the silica deposition layers, some silica deposition films having different refractive indices are formed on a PET film by physical vapor deposition (PVD). The refractive index of the silica deposition layer is calculated from the transmittance curve generated by the thickness of the silica deposition layer and a light interference.

It is preferable that the thickness of the silica deposition layers range from 5 nm to 300 nm. When a thickness of the silica deposition layers is below 5 nm, it is difficult to obtain an even film and the silica deposition layers hardly function sufficiently as a gas barrier material. When a thickness of the silica deposition layers exceeds 300 nm, it is difficult for the silica deposition layers to stay flexible and, after forming the deposition film, cracks are likely to occur on the deposition film by external factors such as bending and pulling. It is more preferable that the thickness of the silica deposition layers range from 10 to 50 nm when considering the productivity by the in-line film formation.

The method for forming the silica deposition layers may be any of, for example, the vacuum deposition method, the sputtering method, the ion plating method, and the plasma chemical vapor deposition (CVD). For the heating method required by the vacuum deposition method, any one of the systems from the electron beam heating method, resistance heating method, and induction heating method can be used. For increasing the light transmittance of the silica deposition layers, for example, a reactive deposition method in which various gases such as oxygen are injected may be used.

The first gas barrier covering layers 54, 64 and the second gas barrier covering layers 56, 66 (hereinafter, simply referred also to as "gas barrier covering layers") are the coating layers having gas barrier properties and can have the same configuration as the gas barrier covering layer 11 in the wavelength conversion sheets 100, 200 described above. The gas barrier covering layers can be formed using a coating agent. The coating agent has, for example, as the main agent, an aqueous solution or a solution in a mixture of water/alcohol containing at least one selected from the group consisting of water soluble polymers, metal alkoxides, hydrolyzates of metal alkoxides, and silane coupling agents.

The coating agent is specifically prepared by, for example, directly mixing a metal alkoxide, a hydrolyzate of a metal alkoxide, and a silane coupling agent with an aqueous solution or a solution in a mixture of water/alcohol of a water soluble polymer. Alternatively, the coating agent is prepared by, for example, mixing a metal alkoxide that has been subjected to treatment such as hydrolysis in advance and a silane coupling agent with an aqueous solution or a solution in a mixture of water/alcohol of a water soluble polymer. The solution of the coating agent is applied onto the adhesion layers 52, 62 and dried with heating to form the gas barrier covering layers. Further, the solution of the coating agent is applied onto each of the silica deposition layers, and dried with heating to form the gas barrier covering layers.

Examples of the water soluble polymer used for the coating agent include hydroxyl group-containing polymer compounds. Examples of the hydroxyl group-containing polymer compound include polyvinyl alcohol (PVA), polyvinylpyrrolidone, starches, methylcellulose, carboxymethylcellulose, and sodium alginate. PVA is particularly preferable as the coating agent. The gas barrier covering layers made of PVA have good gas barrier properties.

The metal alkoxides are the compounds represented by the formula M(OR)ₙ, (wherein M is a metal such as Si, Ti, Al, or Zr, R is an alkyl group such as CH₃ or C₂H₅, and n is the number corresponding to the valence of M). Specific examples of the metal alkoxide include tetraethoxysilane [Si(OC₂H₅)₄] and triisopropoxy aluminum [Al(O-2'-C₃H₇)₃]. Tetraethoxysilane and triisopropoxy aluminum are particularly preferable to be the metal alkoxide. Tetraethoxysilane and triisopropoxy aluminum are relatively stable in an aqueous solvent after hydrolyzed.

The silane coupling agent is a compound represented by the formula R¹ₘSi(OR²)₄₋ₘ, (wherein R¹ is an organic functional group, R² is an alkyl group such as CH₃ or C₂H₅, and m is an integer of 1 to 3). Specific examples of the silane coupling agent can include ethyltrimethoxysilane, vinyltrimethoxysilane, γ-chloropropylmethyldimethoxysilane, γ-chloropropyltrimethoxysilane, glycidoxypropyltrimethoxysilane, γ-methacryloxypropyltrimethoxysilane, and γ-methacryloxypropylmethyldimethoxysilane. In the solution of the silane coupling agent, an isocyanate compound or known additives such as a dispersant, a stabilizer, a viscosity adjuster, and a coloring agent may be added, as necessary, within the range in which the gas barrier properties are not affected.

The application method of the coating agent may be any of the known conventional methods such as a dipping method, a roll coating method, a screen printing method, spray method, and a gravure printing method. The thicknesses of the gas barrier covering layer after dried are preferably 0.01 to 50 µm, and more preferably 0.1 to 10 µm. When the thicknesses of the gas barrier covering layer after dried are below 0.01 µm, an even coating film cannot be obtained and sufficient gas barrier properties are not achieved in some cases. When the thicknesses of the gas barrier covering layer after dried exceed 50 µm, cracks are liable to occur in the gas barrier covering layer.

Note that, for the protective film for wavelength conversion sheet 300 of Fig. 3, it is desirable that the reflectance be 10% or more and 20% or less at each of a wavelength in the blue region of 450 nm, a wavelength in the green region of 540 nm, and a wavelength in the red region of 620 nm. The reflectance correlates with the optical interference by the first and second barrier films 50, 60. When a reflectance exceeds 20% at each wavelength, color irregularities by the optical interference notably appear and poor appearance may consequently be caused even when the protective film for wavelength conversion sheet 300 is used as a diffusion sheet on the light guiding panel in the backlight unit. When a reflectance is below 10% at each wavelength, the O/Si ratio and the refractive index of the silica deposition layers in the first and second barrier films 50, 60 are likely to be out of the above preferable value ranges, due to which the barrier properties of the first and second barrier films 50, 60 may not fully be expressed.

Further, it is desirable that a transmittance of the protective film for wavelength conversion sheet 300 be 80% or more and 95% or less at each of a blue wavelength of 450 nm, a green wavelength of 540 nm, and a red wavelength of 620 nm. A transmittance of below 80% is not preferable because such a transmittance is low and may reduce the light conversion efficiency of the fluorescent substance layer (quantum dot layer).

The protective film for wavelength conversion sheet 300 described above can be produced in the same manner as in the protective films for wavelength conversion sheet 2, 20, except that the configuration of each layer is arranged to be the above configuration.

A wavelength conversion sheet having a structure in which the fluorescent substance layer 1 is enveloped (sealed) between two sheets of the protective film for wavelength conversion sheet 300, 300 can be obtained when the protective film for wavelength conversion sheet 300 described above is used in place of the protective films for wavelength conversion sheet 2, 20, as in the wavelength conversion sheets 100, 200 shown in Fig. 1 and Fig. 2.

Alternatively, each of the layers constituting the protective films for wavelength conversion sheet 2, 20 of the wavelength conversion sheets 100, 200 shown in Fig. 1 and Fig. 2 may be changed to have the configuration of each layer described in the protective film for wavelength conversion sheet 300 described above. Particularly, in the protective films for wavelength conversion sheet 2, 20, the inorganic thin film layer 10 may be a silica deposition layer, wherein a ratio of oxygen to silicon, an O/Si ratio, contained in the silica deposition layer is 1.7 or more and 2.0 or less on an atomic ratio basis; and a refractive index of the silica deposition layer is 1.5 or more and 1.7 or less; a reflectance of the protective films for wavelength conversion sheet 2, 20 is 10% or more and 20% or less and a transmittance of the protective films for wavelength conversion sheet 2, 20 is 80% or more and 95% or less, at all wavelengths of 450 nm, 540 nm, and 620 nm. When these conditions are met, the protective film for wavelength conversion sheet is good in barrier properties, is capable of achieving high luminance for an extended period of time when constituting back light, and further providing, when constituting a display, good appearance free from color changes caused by color irregularities or the like and color reproductivity problems such as black spots on the display for an extended period of time.

### Examples

Hereinafter, the present invention is more specifically described with reference to Examples and Comparative Examples, but is not limited to the following Examples.

### [Example 1]

### (Production of protective film for wavelength conversion sheet)

Silicon oxide, as the inorganic thin film layer (silica deposition layer) was provided to a thickness of 250 Å by the vacuum deposition method on one surface of a 25 µm-thickness polyethylene terephthalate film as a substrate, and a coating liquid containing tetraethoxysilane and polyvinyl alcohol was further applied onto the inorganic thin film layer by the wet coating method to form a 0.3 µm-thickness gas barrier covering layer. Thus, a barrier film, in which the barrier layer comprising the inorganic thin film layer and the gas barrier covering layer is provided on one surface of the substrate, was obtained. Two sheets of the thus obtained barrier film were produced.

Subsequently, a coating liquid containing an acrylic resin and silica microparticles (average particle size of 3 µm) was applied by the wet coating method onto the surface opposite side (substrate side) to the gas barrier covering layer of one of the barrier films to form a 5 µm-thickness coating layer. Thus, the barrier film provided with the coating layer was obtained.

Next, the side of the gas barrier covering layer of the barrier film provided with the coating layer is affixed using an acrylic resin adhesive, with the surface opposite side (substrate side) to the gas barrier covering layer of the barrier film on which the coating layer was not formed, whereby a protective film for wavelength conversion sheet of Example 1 was obtained. Two sheets of the thus obtained protective films for wavelength conversion sheet were produced.

### (Production of wavelength conversion sheet)

CdSe/ZnS 530 (tradename, manufactured by SIGMA-ALDRICH Co. LLC) as the quantum dot was mixed with an epoxy photosensitive resin, subsequently the mixed solution was applied onto the side of the gas barrier covering layer of the protective film for wavelength conversion sheet described above, and a protective film for wavelength conversion sheet having the same configuration was laminated thereon to obtain a wavelength conversion sheet of Example 1 having the structure shown in Fig. 1 by UV curing lamination.

### (Production of backlight unit)

A backlight unit of Example 1 was produced by combining the obtained wavelength conversion sheet with an LED light source and a light guiding panel.

### [Example 2]

### (Production of protective film for wavelength conversion sheet)

A protective film for wavelength conversion sheet of Example 2 was obtained in the same manner as in Example 1, except that the side of the gas barrier covering layer of the barrier film provided with the coating layer is affixed, using an acrylic resin adhesive, with the side of the gas barrier covering layer of the barrier film on which the coating layer was not formed. Two sheets of the thus obtained protective film for wavelength conversion sheet were produced.

### (Production of wavelength conversion sheet)

CdSe/ZnS 530 (tradename, manufactured by SIGMA-ALDRICH Co. LLC) was mixed with an epoxy photosensitive resin, subsequently the mixed solution was applied onto the substrate side (the surface opposite side to the coating layer) of the protective film for wavelength conversion sheet described above, and a protective film for wavelength conversion sheet having the same configuration was laminated thereon to obtain a wavelength conversion sheet of Example 2 having the structure shown in Fig. 2 by UV curing lamination.

### (Production of backlight unit)

A backlight unit of Example 2 was produced by combining the obtained wavelength conversion sheet with an LED light source and a light guiding panel.

### [Example 3]

A protective film for wavelength conversion sheet of Example 3 was obtained in the same operation as in Example 1, except that the coating layer was not provided. Further, a wavelength conversion sheet and a backlight unit of Example 3 were obtained in the same operation as in Example 1, except that the obtained protective film for wavelength conversion sheet was used.

### [Comparative Example 1]

A protective film for wavelength conversion sheet of Comparative Example 1 was obtained in the same operation as in Example 1, except that a 25 µm-thickness polyethylene terephthalate film was used in place of the barrier film provided with the coating layer. Further, a wavelength conversion sheet and a backlight unit of Comparative Example 1 were obtained in the same operation as in Example 1, except that the obtained protective film for wavelength conversion sheet was used.

### [Comparative Example 2]

A protective film for wavelength conversion sheet of Comparative Example 2 was obtained in the same operation as in Example 1, except that a 25 µm-thickness polyethylene terephthalate film was used in place of the barrier film on which the coating layer was not formed. Further, a wavelength conversion sheet and a backlight unit of Comparative Example 2 were obtained in the same operation as in Example 1, except that the obtained protective film for wavelength conversion sheet was used.

### [Comparative Example 3]

A protective film for wavelength conversion sheet of Comparative Example 3 was obtained in the same operation as in Example 2, except that a 12 µm-thickness polyethylene terephthalate film was used in place of the barrier film provided with the coating layer. Further, a wavelength conversion sheet and a backlight unit of Comparative Example 3 were obtained in the same operation as in Example 2, except that the obtained protective film for wavelength conversion sheet was used.

### [Comparative Example 4]

Silicon oxide, as the first inorganic thin film layer (silica deposition layer) was provided to a thickness of 250 Å by the vacuum deposition method on one surface of a 25 µm-thickness polyethylene terephthalate film as a substrate, and a coating liquid containing tetraethoxysilane and polyvinyl alcohol was further applied onto the first inorganic thin film layer by the wet coating method to form a 0.3 µm-thickness first gas barrier covering layer. Subsequently, silicon oxide, as the second inorganic thin film layer (silica deposition layer) was provided to a thickness of 250 Å by the vacuum deposition method on the first gas barrier covering layer, and a coating liquid containing tetraethoxysilane and polyvinyl alcohol was further applied onto the second inorganic thin film layer by the wet coating method to form a 0.3 µm-thickness second gas barrier covering layer. Thus, the barrier film, in which the barrier layer comprising the first inorganic thin film layer, the first gas barrier covering layer, the second inorganic thin film layer, and the second gas barrier covering layer is provided on one surface of the substrate, was obtained.

Subsequently, the side of the gas barrier covering layer of the barrier film was affixed, using an acrylic resin adhesive, with a 25 µm-thickness polyethylene terephthalate film to obtain a protective film for wavelength conversion sheet of Comparative Example 4. Two sheets of the thus obtained protective film for wavelength conversion sheet were produced. A wavelength conversion sheet and a backlight unit of Comparative Example 4 were obtained in the same operation as in Example 2, except that the obtained protective films for wavelength conversion sheet were used.

### <Luminance measurement>

The backlight units produced in Examples 1 to 3 and Comparative Examples 1 to 4 were measured for the luminance at the time of LED emitting (initial luminance) using a luminance meter (product of Konica Minolta, Inc., LS-100). Next, as a reliability test, the backlight units were stored under the environment of 60°C, 90% RH for 500 hours and subsequently measured for the luminance. The smaller the difference between the initial luminance and the luminance after preserved for 500 hours, the better the barrier properties of the protective film for wavelength conversion sheet is suggested to be good. The obtained results are shown in Table 1.

### <Appearance evaluation>

The backlight units produced in Examples 1 to 3 and Comparative Examples 1 to 4 were each examined for the appearance with naked eyes with LED light emitted to evaluate for the presence of foreign objects (splashes, scratches, wrinkles or the like) and the occurrence of interference fringes. The appearance with no foreign objects or interference fringes was evaluated as "A", whereas the appearance with foreign objects and interference fringes was evaluated as "B". As in the luminance measurement, the appearance evaluation was carried out both at the initial time and after preserved under the environment of 60°C, 90% RH for 500 hours. The obtained results are shown in Table 1.

**[Table 1]**

| | Luminance (cd/m²) | | Appearance evaluation | | | |
|---|---|---|---|---|---|---|
| | | | Foreign object | | Interference fringe | |
| | Initial | After preserved | Initial | After preserved | Initial | After preserved |
| Example 1 | 94 | 90 | A | A | A | A |
| Example 2 | 94 | 91 | A | A | A | A |
| Example 3 | 94 | 93 | A | A | A | A |
| Comparative Example 1 | 93 | 85 | A | A | A | A |
| Comparative Example 2 | 92 | 87 | A | A | A | A |
| Comparative Example 3 | 92 | 84 | A | A | A | A |
| Comparative Example 4 | 94 | 93 | B | B | B | B |

As apparent from the results shown in Table 1, with the backlight units which used the wavelength conversion sheets of Examples 1 to 3, it was verified that two sheets of the laminated barrier films prevented the influence caused by foreign objects such as splashes and the occurrence of interference fringes. Further, by using the wavelength conversion sheets of Examples 1 to 3, the backlight units substantially free from deterioration even after subjected to the reliability test could be obtained.

To the contrary, since the wavelength conversion sheets of Comparative Examples 1 to 3 had the structure in which a single barrier film and a polyester film were affixed, the reduced luminance was noted due to poor barrier properties particularly after the reliability test and not only the overall luminance reduction but also local luminance reductions were noted in appearance.

The wavelength conversion sheet of Comparative Example 4 had good barrier properties, however, interference fringes were clearly noted as a result of laminating twice of the inorganic thin film layers (silica deposition layers) and the gas barrier covering layers, both of which were thin film layers.

### [Example 4]

### (Production of protective film for wavelength conversion sheet)

A composition for an adhesion layer was applied on one surface of a 16 µm-thickness PET film substrate formed using PET having a weight average molecular weight of 60000 to laminate a 0.1 µm-thickness adhesion layer. Next, a first silica deposition layer was laminated as an inorganic thin film layer on the adhesion layer by the physical vapor deposition method so that a thickness thereof was 30 nm. On the first silica deposition layer, a 1 µm-thickness first gas barrier covering layers (the first composite coating layer) was formed by the wet coating method using a composition for a gas barrier covering layer. Further, on the first gas barrier covering layer, a second silica deposition layer was laminated so that a thickness thereof was 30 nm. Subsequently, on the second silica deposition layer, a 1 µm-thickness second gas barrier covering layer (the second composite coating layer) was formed by the wet coating method using a composition for a gas barrier covering layer to produce a first barrier film. The O/Si ratio was 1.8 on an atomic ratio basis and the refractive index was 1.61 for the first silica deposition layer and the second silica deposition layer. Further, a second barrier film was produced by the same method as in the first barrier film.

The composition for an adhesion layer was an ethyl acetate solution of an acrylic polyol and tolylene diisocyanate. The OH group of the acrylic polyol and the NCO group of tolylene diisocyanate were in the same amount. The concentration of the solid content of the acrylic polyol and the tolylene diisocyanate together in the ethyl acetate solution was 5 mass%.

In the production of the composition for a gas barrier covering layer, 10.4 g of tetraethoxysilane was added to 89.6 g of 0.1 N (normal concentration) hydrochloric acid and the obtained hydrochloric acid solution was stirred for 30 minutes to hydrolyze tetraethoxysilane. The concentration of the solid content after hydrolysis was 3 mass% on an SiO₂ conversion basis. The hydrolyzed solution of tetraethoxysilane and a 3 mass% aqueous solution of polyvinyl alcohol were mixed to prepare the composition for a gas barrier covering layer. The mixing ratio of the hydrolyzed solution of tetraethoxysilane and polyvinyl alcohol was 50 to 50 on a mass% conversion basis.

For forming the first and second silica deposition layers, suitable deposition conditions were determined by changing deposition conditions such as the type of materials to be deposited, before the formation. The O/Si ratio of the silica deposition layers was analyzed using an X-ray photoelectron spectroscopy analyzer (manufactured by JEOL LTD., JPS-90MXV). The measurement was carried out using a non-monochromatic MgKα (1253.6 eV) as an X-ray source at an X-ray output of 100 W (10 kV - 10 mA). The quantitative analysis for determining an O/Si ratio of the silica deposition layers was carried out using relative sensitivity factors of 2.28 for O Is and of 0.9 for Si 2p. The refractive indices of the silica deposition layers were calculated by the simulation using peak wavelengths on the transmittance curve generated by the thickness of the silica deposition layer and a light interference.

Next, the first barrier film and the second barrier film were affixed via the adhering layer. The adhering layer was produced using a two-component curable urethane adhesive. The thickness of the adhering layer after adhered was 5 µm. On the PET film of the second barrier film, a coating layer in which olefin particles having a particle size of 2 µm were dispersed in a urethane binder was applied so that a thickness thereof was 3 µm. Thus, a first protective film for wavelength conversion sheet having a haze value of 60% (JIS K7136) was obtained. Further, a second protective film for wavelength conversion sheet was produced by the same method as in the first protective film for wavelength conversion sheet.

### (Production of the wavelength conversion sheet)

A fluorescent substance having a CdSe/ZnS core-shell structure was obtained by the following method. First, a solution of octadecene to which octylamine and cadmium acetate were added was mixed with a solution of trioctylphosphine in which selenium was dissolved in a mass ratio of 1 : 1, and the mixture was allowed to pass through a heated microchannel to obtain a solution of CdSe microparticles, which were to be nuclear microparticles. Subsequently, the CdSe microparticle solution and a solution of [(CH₃)₂NCSS]₂Zn dissolved in trioctylphosphine were mixed in a mass ratio of 1 : 1 and the mixture was allowed to pass through a heated microchannel to obtain a fluorescent substance of the CdSe/ZnS structure. The obtained fluorescent substance was mixed with a photosensitive resin (epoxy resin) to obtain a mixture for a quantum dot layer. Subsequently, the mixture for a quantum dot layer was applied onto the substrate of the first barrier film of the first protective film for wavelength conversion sheet (on the surface opposite side to the coating layer) and the second protective film for wavelength conversion sheet was laminated thereon so that the substrate side of the first barrier film (the opposite side to the coating layer) faced the first protective film for wavelength conversion sheet. The mixture for a quantum dot layer was irradiated with UV to cure the photosensitive resin contained in the mixture for a quantum dot layer. Thus, a wavelength conversion sheet in which the quantum dot layer (fluorescent substance layer) was interposed between the first and second protective films for wavelength conversion sheet, was produced.

### (Production of backlight unit)

A backlight unit of Example 4 was produced by combining the obtained wavelength conversion sheet with an LED light source and a light guiding panel.

### [Example 5]

A composition for an adhesion layer was applied on one surface of a 16 µm-thickness PET film substrate formed using PET having a weight average molecular weight of 60000 to laminate a 0.1 µm-thickness adhesion layer. Next, a first silica deposition layer as the inorganic thin film layer was laminated on the adhesion layer by the physical vapor deposition method so that a thickness thereof was 30 nm. On the first silica deposition layer, a 1 µm-thickness first gas barrier covering layer (first composite coating layer) was formed by the wet coating method using a composition for a gas barrier covering layer to produce a first barrier film. The O/Si ratio was 1.8 on an atomic ratio basis and the refractive index was 1.61 in the first silica deposition layer. Further, a second barrier film was produced by the same method as in the first barrier film. Each of the layers in the first and the second barrier films was formed by the same method as in Example 4. Both of the first and the second barrier films of Example 5 were configured to have a single layer of the silica deposition layer and a single layer of the gas barrier covering layer; in other words, these barrier films had the configuration in which the second silica deposition layer and the second gas barrier covering layer are removed from the first and second barrier films of Example 4.

First and second protective films for wavelength conversion sheet having a haze value of 60% (JIS K7136) were obtained in the same manner as in Example 4, except that the first and the second barrier films produced by the above method were used. Further, a wavelength conversion sheet and a backlight unit using the sheet were obtained in the same manner as in Example 4, except that the obtained first and the second protective films for wavelength conversion sheet were used.

### [Example 6]

The O/Si ratio of the SiO deposition material was changed and the conditions for the physical vapor deposition were adjusted so that silica deposition layers had an O/Si ratio of 1.7 on an atomic ratio basis and a refractive index of 1.55, whereby a first and a second silica deposition layers were produced. A protective film for wavelength conversion sheet, a wavelength conversion sheet, and a backlight unit were obtained by the same method as in Example 4, except the values of the O/Si ratio and the refractive index of the silica deposition layers.

### <Evaluation of protective films for wavelength conversion sheet and backlight units>

Table 2 shows the evaluation results on the reflectance and transmittance of the protective films for wavelength conversion sheet produced in Examples 4 to 6. Table 3 shows the evaluation results on the water vapor permeability of the protective films for wavelength conversion sheet produced in Examples 4 to 6 and on the luminance and appearance of the backlight units.

**[Table 2]**

| | Barrier film | | Protective film for wavelength conversion sheet | | | | | |
|---|---|---|---|---|---|---|---|---|
| | | | Reflectance (%) | | | Transmittance (%) | | |
| | O/Si ratio | Refractive index | 450 nm | 540 nm | 620 nm | 450 nm | 540 nm | 620 nm |
| Example 4 | 1.8 | 1.61 | 15 | 16 | 12 | 85 | 83 | 87 |
| Example 5 | 1.8 | 1.61 | 12 | 12 | 11 | 85 | 85 | 86 |
| Example 6 | 1.7 | 1.55 | 17 | 17 | 13 | 78 | 78 | 82 |

**[Table 3]**

| | Protective film for wavelength conversion sheet | Backlight unit | | | | | | | |
|---|---|---|---|---|---|---|---|---|---|
| | Water vapor permeability (glm²·day) | Luminance (cd/m²) | | Appearance evaluation 1 | | Appearance evaluation 2 | | | |
| | | Initial | After preserved | Initial | After preserved | Foreign object | | Interference Fringe | |
| | | | | | | Initial | After preserved | Initial | After preserved |
| Example 4 | <0.01 | 91 | 89 | A | A | A | A | A | A |
| Example 5 | 0.03 | 92 | 83 | A | A | A | A | A | A |
| Example 6 | <0.01 | 89 | 88 | A | A | A | A | A | A |

The reflectance and transmittance of the protective films for wavelength conversion sheet were measured at the wavelengths of 450 nm, 540 nm, and 620 nm, using a spectrophotometer (tradename: SHIMAZU UV-2450). For the measurement, the measuring beam was irradiated from the opposite side surface to the coating layer of the protective film for wavelength conversion sheet. The water vapor permeability (g/m²·day) of the protective films for wavelength conversion sheet was measured using a water vapor permeation analysis system (manufactured by Modern Control, Inc., Permatran 3/33) under 40°C/90% RH atmosphere.

The measurement of the luminance and evaluation of the appearance (Appearance evaluation 1) of the backlight unit were carried out before and after a 1000 hour-preservation test under 60°C/90% RH atmosphere. In Table 3, the term Initial means before the preservation test, and the term After preserved means after the preservation test. The luminance of the backlight unit was measured using a luminance meter (manufactured by Konica Minolta, Inc., LS-100). The appearance of the backlight unit (Appearance evaluation 1) was evaluated as "A" when the backlight unit used for a display had an acceptable appearance, but evaluated as "B" when a display had color tone changes caused by color irregularities and color reproductivity problems such as black spots.

Appearance evaluation 2 of the backlight units was carried out by the following method. More specifically, the backlight units were each examined for the appearance with naked eyes with LED light emitted to evaluate for the presence of foreign objects (splashes, scratches, wrinkles or the like) and the occurrence of interference fringes. The appearance with no foreign objects or interference fringes was evaluated as "A", whereas the appearance with foreign objects and interference fringes was evaluated as "B". The appearance evaluation was carried out both at the initial time and after preserved under the environment of 60°C, 90% RH for 500 hours.

### Industrial Applicability

A display of very high definition can be produced by using the protective film for wavelength conversion sheet, which is a laminate film in which two or more of the barrier films are laminated against each other, the wavelength conversion sheet in which the fluorescent substance layer is covered with such a protective film for wavelength conversion sheet, and the backlight unit using such a wavelength conversion sheet, of the present invention.

### Reference Signs List

1 ··· Fluorescent substance layer, 2, 20, 300 ··· Protective film for wavelength conversion sheet, 3 ··· Fluorescent substance, 4 ··· Sealing resin, 5 ··· Barrier film, 6 ··· Adhering layer, 7 ··· Coating layer, 8 ··· Substrate, 9 ··· Barrier layer, 10 ··· Inorganic thin film layer, 11 ··· Gas barrier covering layer, 31 ··· Coating layer, 50 ··· First barrier film, 51 ··· Substrate, 52 ··· Adhesion layer, 53 ··· First silica deposition layer, 54 ··· First gas barrier covering layer, 55 ··· Second silica deposition layer, 56 ··· Second gas barrier covering layer, 60 ··· Second barrier film, 61 ··· Substrate, 62 ··· Adhesion layer, 63 ··· First silica deposition layer, 64 ··· First gas barrier covering layer, 65 ··· Second silica deposition layer, 66 ··· Second gas barrier covering layer, 100, 200 ··· Wavelength conversion sheet.

## Claims

1. A protective film for wavelength conversion sheet for protecting a fluorescent substance in a wavelength conversion sheet,
the protective film for wavelength conversion sheet having a structure in which two or more barrier films, each comprising a substrate and one or more barrier layers provided on at least one surface of the substrate, are laminated.

2. The protective film for wavelength conversion sheet according to Claim 1, having a structure in which two or more of the barrier films are laminated using an adhering layer, and
the barrier layers of the adjacent two barrier films are disposed so as to face against each other via the adhering layer.

3. The protective film for wavelength conversion sheet according to Claim 1 or 2, further comprising a coating layer having an optical function, wherein the coating layer is disposed on at least one surface of the protective film for wavelength conversion sheet.

4. The protective film for wavelength conversion sheet according to Claim 3, wherein the optical function is an interference fringe prevention function.

5. The protective film for wavelength conversion sheet according to Claim 3 or 4, wherein the coating layer contains a binder resin and microparticles dispersed in the binder resin.

6. The protective film for wavelength conversion sheet according to any one of Claims 1 to 5, wherein the barrier layer includes an inorganic thin film layer laminated on one surface of the substrate and a gas barrier covering layer laminated on the inorganic thin film layer.

7. The protective film for wavelength conversion sheet according to Claim 6, wherein the barrier layer has a structure in which two or more of the inorganic thin film layers and two or more of the gas barrier covering layers are alternately laminated one by one.

8. The protective film for wavelength conversion sheet according to Claim 6 or 7, wherein the gas barrier covering layer is a layer containing at least one selected from the group consisting of hydroxyl group-containing polymer compounds, metal alkoxides, hydrolyzates of metal alkoxides, and metal alkoxide polymers.

9. The protective film for wavelength conversion sheet according to any one of Claims 1 to 8, further comprising a coating layer having an optical function disposed on at least one surface,
wherein the barrier layer comprises a silica deposition layer as an inorganic thin film layer,
a ratio of oxygen to silicon, an O/Si ratio, contained in the silica deposition layer is 1.7 or more and 2.0 or less on an atomic ratio basis, and
a refractive index of the silica deposition layer is 1.5 or more and 1.7 or less,
a reflectance of the protective film for wavelength conversion sheet is 10% or more and 20% or less and a transmittance of the protective film for wavelength conversion sheet is 80% or more and 95% or less at all wavelengths of 450 nm, 540 nm, and 620 nm.

10. A wavelength conversion sheet comprising a fluorescent substance layer containing a fluorescent substance and the protective film for wavelength conversion sheet according to any one of Claims 1 to 9 laminated on at least one surface of the fluorescent substance layer.

11. The wavelength conversion sheet according to Claim 10, wherein the protective film for wavelength conversion sheet has a coating layer having an optical function on a surface opposite side to the side facing the fluorescent substance layer.

12. A backlight unit comprising an LED light source, a light guiding panel, and the wavelength conversion sheet according to Claim 10 or 11.
